# EUROPEAN PATENT APPLICATION

(11) **EP 2 889 406 A1**
(43) Date of publication of application: **01.07.2015**
(21) Application number: 14199421.0
(22) Date of filing: 19.12.2014
(51) Int. Cl.: D04H 1/4209, D04H 1/541, E04B 1/74, E04B 1/84

(54) **Low density acoustical panels**

(30) Priority: 24.12.2013 US 201314140177
(71) Applicant: Armstrong World Industries, Inc., Lancaster, Pennsylvania 17603 (US)
(72) Inventor: Wiker, Anthony L., Lancaster, PA Pennsylvania 17601 (US)
(74) Representative: Jenkins, Peter David

(57) **Abstract**

Described herein are building products comprising crimped bicomponent fibers and a non-woven fabric, which demonstrate, *inter alia,* improved acoustical performance. Methods of making and using the building products are also described.

## Description

### Cross-Reference to Related Patent Applications

This application claims the benefit of priority from U.S. Patent Application Serial No. 14/140,177, filed December 24, 2013, the contents of which are hereby incorporated herein by reference.

### Background

Conventional acoustic ceiling tile is a non-woven structure which may include a core composed of base fibers, fillers, and binders combined to form the ceiling tile structure. The base fibers can be natural or synthetic materials, e.g., mineral fibers. Typically mineral fiber substrates of acoustical ceiling panels are wet-formed and fall within the density range of 9-25 lb/ft³. Their porosities range low from 50-89% and therefore sound absorption is lower with NRCs ranging 0.50-0.75 after finishing and decorating the surfaces. They are usually wet-formed, bound with starch, and require large amounts of energy to remove residual water from the forming process. Surfaces must then be sanded smooth and material is wasted.

There are existing dry-formed mineral fiber and fiber glass acoustical ceiling products in which the web is in the density range of the invention; however these webs are poorly formed with irregular formation and require expensive face scrims and back scrims to impart adequate product surface quality and sufficient rigidity for the panel to be self-supporting in the ceiling grid. Most often such webs are bound with a phenolic resin that emits formaldehyde in the manufacturing process and some residual from the product. Other non-formaldehyde reactive resins, i.e. acrylic acid esters, are beginning to be used as well, but they require excess heat to drive off solution water and to drive the reaction. They are difficult to apply and often complicate the web forming process.

Thus, there remains a need for highly acoustically absorptive ceiling tiles with sufficient rigidity and acceptable surface quality, which can be easily cut or molded into complex shapes or embossed with surface patterns; and also avoid the challenges provided by the use of certain binding resins. Embodiments of the present invention are directed to this and other ends.

### Summary

In some embodiments, the present invention provides an acoustical substrate, comprising: from about 5 to about 25 wt. % of a crimped bicomponent fiber; and from about 75 to about 95 wt. % of a non-woven fabric.

In some embodiments, the present invention provides methods of preparing an acoustical substrate comprising: providing a nonwoven fabric comprising a web; incorporating a crimped bicomponent fiber into said nonwoven fabric web; and exposing said web comprising said crimped bicomponent fiber to a heat source; wherein the substrate has a bulk density between about 1.5 lbs/ft³ and about 3.5 lbs/ft³. In some embodiments, the present invention provides methods of reducing noise in a dwelling.

### Detailed Description

In some embodiments, the present invention provides an acoustical substrate, comprising: from about 5 to about 25 wt. % of a crimped bicomponent fiber; and from about 75 to about 95 wt. % of a nonwoven fabric. In some embodiments, the bicomponent fiber is a heat-fusible bicomponent fiber.

In some embodiments, the bicomponent fiber comprises two thermoplastic polymers having two different melting temperatures. Suitable thermoplastic polymers include olefinic polymers, e.g., polyethylene and polypropylene; polyesters, e.g., polyethylene terephthalate, polybutylene terephthalat; nylons, e.g., nylon 6 and nylon 6,6; thermoplastic elastomers, e.g., SBS and ABS. In some embodiments, the bicomponent fiber comprises a first component bicomponent to a second component. In some embodiments, the first component comprises an olefinic polymer. In some embodiments, the second component comprises an olefinic polymer. In other embodiments, at least one of the first component and the second component is a thermoplastic olefinic polymer. In further embodiments, the centers of gravity of the first and second components of the bicomponent fiber are mutually different in the fiber cross section.

In some embodiments, the olefinic resin of the first component is selected from: polypropylene, a copolymer of propylene and an α-olefin; an ethylene polymer; and polymethyl pentene. In some embodiments, the olefinic resin of the second component is selected from: polypropylene, a copolymer of propylene and an α-olefin; an ethylene polymer; and polymethyl pentene.

In some embodiments, the α-olefin is selected from ethylene; butene-1, octane; 4-methyl pentene; polyethylene terephthalate; and polyethylene terephthalate-glycol. In other embodiments, the ethylene polymer is selected from high-density polyethylene; medium-density polyethylene; low-density polyethylene; and linear low-density polyethylene. In some embodiments, the components of the bicomponent fiber are selected from polyethylene terephthalate, glycol-modified polyethylene terephthalate and polybutylene.

In some embodiments, the first component further comprises an additive. In some embodiments, the second component further comprises an additive. In some embodiments, the additive is selected from an antioxidant; a light stabilizer; a UV absorbent; a neutralizer; a nucleating agent; a lubricant; a bactericide; a deodorizing agent; a flame retardant; an antistatic agent; a pigment; and a plasticizer.

In some embodiments, the melting point of the first component is not greater than about 150 °C. In some embodiments, the melting point of the first component is from about 80 °C to about 150 °C. In some embodiments, the melting point of the first component is from about 120 °C to about 145 °C.

In some embodiments, the melting point of the second component is not greater than about 200 °C. In some embodiments, the melting point of the second component is from about 140 °C to about 200 °C. In some embodiments, the melting point of the second component is from about 155 °C to about 170 °C. In some embodiments, the melting point of the second component is greater than the melting point of the first component.

In some embodiments, the difference in melting points between the first component and the second component is from about 10 °C to about 40 °C. In some embodiments, the difference in melting points between the first component and the second component is from about 20 °C to about 30 °C.

In some embodiments, the length of the bicomponent fiber is from about 3 mm to about 30 mm. In other embodiments, the length of the bicomponent fiber is from about 6 mm to about 25 mm.

In some embodiments, the two components of the bicomponent fiber has a configuration selected from concentric sheath-core, eccentric sheath-core and side-by-side. In some embodiements, the fiber has a concentric sheath-core configuration. In some embodiments, the first component comprises from about 25 to about 75 wt. %, of the bicomponent fiber and the second component comprises from about 25 to about 75 wt. % of the bicomponent fiber. In some embodiments, the first component comprises from about 35 to about 65 wt. %, of the bicomponent fiber and the second component comprises from about 35 to about 65 wt. % of the bicomponent fiber. In some embodiments, the first component comprises from about 40 to about 60 wt. %, of the bicomponent fiber and the second component comprises from about 40 to about 60 wt. % of the bicomponent fiber. In some embodiments, the first component comprises about 50 wt. %, of the bicomponent fiber and the second component comprises about 50 wt. % of the bicomponent fiber.

In some embodiments, the second component comprises a plurality of filaments. In some embodiments, the filaments are about 2 denier to about 4 denier.

In some embodiments, the acoustical substrate provides a NRC of greater than about 0.50. In some embodiments, the acoustical substrate provides a NRC of greater than about 0.55. In some embodiments, the acoustical substrate provides a NRC of greater than about 0.60. In some embodiments, the acoustical substrate provides a NRC of greater than about 0.65. In some embodiments, the acoustical substrate provides a NRC of greater than about 0.70. In some embodiments, the acoustical substrate provides a NRC of greater than about 0.75. In some embodiments, the acoustical substrate provides a NRC of greater than about 0.80. In some embodiments, the acoustical substrate provides a NRC of greater than about 0.85. In some embodiments, the acoustical substrate provides a NRC of greater than about 0.90. In some embodiments, the acoustical substrate provides a NRC of about 0.95. In some embodiments, the acoustical substrate provides a NRC of greater than about 0.95.

In some embodiments, the bulk density of the acoustical substrate is between about 1 to about 4 lbs./ft³. In some embodiments, the bulk density of the acoustical substrate is between about 1.5 to about 3.5 lbs/ft³.. In some embodiments, the bulk density of the acoustical substrate is between about 1.75 to about 2.5 lbs/ft³.

In some embodiments, the acoustical substrate comprises from about 10 to about 20 wt. % of a bicomponent fiber. In some embodiments, the acoustical substrate comprises from about 80 to about 90 wt. % of mineral wool. In some embodiments, the acoustical substrate comprises from about 10 to about 20 wt. % of a bicomponent fiber; and from about 80 to about 90 wt. % of mineral wool. In some embodiments, the acoustical substrate comprises from about 12 to about 17 wt. % of a bicomponent fiber. In some embodiments, the acoustical substrate comprises from about 83 to about 88 wt. % of mineral wool. In some embodiments, the acoustical substrate comprises from about 12 to about 17 wt. % of a bicomponent fiber; and from about 83 to about 88 wt. % of mineral wool. In some embodiments, glassfiber or a mixture of glassfiber and mineral wool is used in place of mineral wool.

In some embodiments, the bicomponent fiber is crimped in a planar zig-zag or spiral shape. In some embodiement the bicomponent fiber is crimped in a zig-zag shape. In some embodiments, the bicomponent fiber has a crimp shape index of from about 1 to about 2. In some embodiments, the bicomponent fiber has a crimp shape index of from about 1.05 to about 1.60. The crimp shape index values provided herein are calculated using the following formula: actual length of short fiber/distance between both ends of the crimped fiber. In some embodiments, the bicomponent fiber has between about 5 and 15 crimps/inch. In some embodiement, the bicomponent fiber has between about 7 and 10 crimps/inch.

In some embodiments, the acoustical substrate is prepared by way of an air laying process.

In some embodiments, the non-woven fabric is selected from mineral wool; slag wool; and rock wool, and a combination of two or more thereof. In some embodiments, the non-woven fabric comprises mineral wool.

In some embodiments, the substrate is formaldehyde free.

In further embodiments, the substrate is a tile. In other embodiments, the substrate is a ceiling tile. In some embodiments, the acoustical substrate further comprises a scrim.

Some embodiments of the present invention provide methods of preparing an acoustical substrate comprising: providing a nonwoven fabric comprising a web; incorporating a crimped bicomponent fiber into said nonwoven fabric web; and heating said web comprising said crimped bicomponent fiber.

Some embodiments of the present invention provide a method of forming an acoustical panel comprising: providing a crimped bicomponent fiber having a sheath layer surrounding an inner core; dispersing and mixing said bicomponent fiber with mineral wool to form a fibrous batt; heating the fibrous batt; and softening the sheath layer to form a matrix of crimped fiber, forming the acoustical panel.

In some embodiments, the sheath layer comprises a first polymer and the inner core comprises a second polymer. In some embodiments, the first polymer has a melting point lower than a melting point of a second polymer which comprises the inner core.

In some embodiments, the bicomponent fiber and the non-woven fabric are mixed and dispersed in a high velocity air stream. In some embodiments, the fibrous batt is heated to a temperature above the melting temperature of the first polymer and below the melting temperature of the second polymer.

In some embodiments, the methods further comprise the step of consolidating the formed acoustical panel. In some embodiments, the formed acoustical panel is consolidated by sequential heating and cooling. Some embodiments further comprise the step of pressing the formed acoustical panel. In some embodiments, the acoustical panel is form cured.

### Examples

### Example 1

An exemplary substrate of the present invention is prepared by dispersing a crimped bicomponent fiber having a concentric sheath-core configuration having a zig-zag pattern, wherein the sheath layer comprises coPET and the inner core layer comprises PET, in a batt of mineral wool; mixing the crimped bicomponent fiber with the batt; and heating the fibrous batt to a temperature of about 110 °C to melt the sheath layer of the crimped bicomponent fiber.

### Example 2

Various substrates are prepared as described in Table 1 (below). The data described in Table 1 highlights the impact that length and crimping have on web loft.

**Table 1**

| | **Core/Sheath** | **Dimensions** | **Crimp** | **Basis Weight (gsm)** | **Web Thickness (in)** | **Web Density (lb/ft³)** |
|---|---|---|---|---|---|---|
| Ex 1 | co-PET/PET | 6 mm X 2d | None | 1546 | 7/8 | 4.34 |
| Ex 2 | co-PET/PET | 6 mm X 2d | 7/inch | 1527 | 1 ¼ | 2.46 |
| Ex 3 | co-PET/PET | 22 mm X 4d | 10/inch | 1235 | **1** ¾ | 1.74 |
| Ex 4 | co-PET/PET | 50 mm | | 1500 | unable to form web | -- |

The data described in Table 1 demonstrates that acoustical substrates comprising the claimed combination of a crimped bicomponent fiber and a mineral batt provide an unexpected improvement in web loft, which would thus provide an unexpected improvement in acoustical performance.

## Claims

1. An acoustical substrate, comprising:
about 5 to about 25 wt. % of a crimped bicomponent fiber; and
about 75 to about 95 wt. % of an inorganic fiber batt.

2. The acoustical substrate according to claim 1, wherein the bicomponent fiber is a heat-fusible bicomponent fiber.

3. The acoustical substrate according to claim 1 or claim 2, wherein the bicomponent fiber comprises a first component and a second component.

4. The acoustical substrate according to claim 3, wherein the first component comprises a thermoplastic polymer.

5. The acoustical substrate according to claim 3 or claim 4, wherein the second component comprises a second thermoplastic polymer.

6. The acoustical substrate according to any one of claims 3 to 5, wherein at least one of the first component and the second component is a thermoplastic olefinic polymer.

7. The acoustical substrate according to claim 6, wherein the olefinic polymer of the first component is selected from: polypropylene, a copolymer of propylene and an α-olefin; an ethylene polymer; and polymethyl pentene; and wherein the olefinic polymer of the second component is selected from: polypropylene, a copolymer of propylene and an α-olefin; and an ethylene polymer.

8. The acoustical substrate according to any one of claims 3 to 7, wherein the first and second components comprise a polyester, optionally wherein the polyester is selected from polyethylene terephthalate, glycol-modified terephthalate and polybutylene terephthalate.

9. The acoustical substrate according to any one of claims 3 to 8, wherein the second component has a melting point higher than that of the first component.

10. The acoustical substrate according to any one of claims 3 to 9, wherein the melting point of the first component is not greater than about 150 °C, optionally not greater than about 200 °C.

11. The acoustical substrate according to any foregoing claim, wherein the length of the bicomponent fiber is from about 3 mm to about 30 mm.

12. The acoustical substrate according to claim 1, wherein the first component comprises from about 40 to about 60 wt. %, of the bicomponent fiber and the second component comprises from about 40 to about 60 wt. % of the bicomponent fiber.

13. The acoustical substrate according to claim 1, comprising from about 12 to about 17 wt. % of a bicomponent fiber, and from about 83 to about 88 wt. % of mineral wool.

14. The acoustical substrate according to any foregoing claim, wherein the substrate is a ceiling tile.

15. A method of reducing noise comprising affixing an acoustical substrate according to any foregoing claim to an interior building surface.
